# EUROPÄISCHE PATENTANMELDUNG

(11) **EP 1 744 231 A2**
(43) Veröffentlichungstag der Anmeldung: **17.01.2007**
(21) Anmeldenummer: 06117057.7
(22) Anmeldetag: 12.07.2006
(51) Int. Cl.: G05B 19/401

(54) **Vorrichtung und Verfahren zur Qualitätskontrolle von Markierungen**

(30) Priorität: 12.07.2005 DE 102005032903; 08.08.2005 DE 102005037411
(71) Anmelder: Borries Markier-Systeme GmbH, 72124 Pliezhausen (DE)
(72) Erfinder: Fröhlich, Konrad, 70180, Stuttgart (DE)
(74) Vertreter: Farago, Peter Andreas

(57) **Zusammenfassung**

Die vorliegende Erfindung beschreibt eine Vorrichtung und ein Verfahren zur Vermessung der Prägetiefe von Markierungen an einem Werkstück, die einen an einer Markiervorrichtung mit NC-Steuerung angebrachten Sensor für die Erfassung der Prägetiefe umfasst, wobei die NC-Steuerung mit der Elektronik des Sensors integriert ist, so dass die Steuerdaten der NC-Steuerung ebenfalls für die Positionierung und wahlweise Parametrierung des Sensors sowie zur positionsabhängigen Bewertung der Messwerte zur Verfügung stehen zur Verfügung stehen.

## Beschreibung

Die vorliegende Erfindung betrifft allgemein eine Vorrichtung und Verfahren zur Qualitätskontrolle von Markierungen und insbesondere eine Vorrichtung und Verfahren zur Vermessung der Prägetiefe von Markierungen.

Markierungen (Beschriftungen) durch vertiefte Prägungen in Metall werden entweder durch das Eindrücken oder Einschlagen gravierter Zeichen ("Stahlstempel") erzeugt, oder durch das Ziehen einer Nadel mit leicht verrundeter Spitze aus Hartmetall oder Diamant in Form der zu erzeugenden Zeichen.

In beiden Fällen wird das unter dem Werkzeug (Stahlstempel oder Nadel) liegende Material teilweise verdichtet, aber überwiegend verdrängt, je nach Werkstück, Werkzeug und Gegenhalter nach unten, nach der Seite oder auch in Form eines "Aufwurfs" seitlich von dem vertieften Zeichen nach oben.

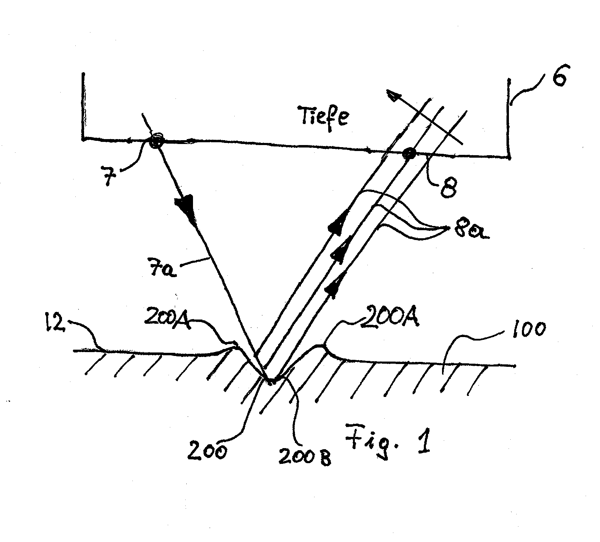

Wie in der Fig. 1 gezeigt, weist demnach ein Schnitt durch eine Prägung quer zur Linien-Richtung, von der ebenen Werkstück-Oberfläche ausgehend, zunächst eine leichte Erhöhung (Aufwurf), dann eine in etwa V-förmige Vertiefung entsprechend dem Gravur- oder Spitzenwinkel des Werkzeugs mit runder "Tal-Sohle" (ebenfalls vom Werkzeug abhängig) und nach der V-förmigen Vertiefung wieder eine geringe Erhöhung (Aufwurf), ehe wieder das Niveau der Werkstück-Oberfläche erreicht wird.

In vielen Anwendungen wird insbesondere die Tiefe der Prägung genau spezifiziert, weil sie als Maß für andere, nicht direkt messbare aber wichtige Eigenschaften der Prägung benutzt werden. Zu diesen Eigenschaften zählen u.a. gute Lesbarkeit, Lesbarkeit nach einer Oberflächen-Veredelung wie Lackierung oder Verzinkung, Dauerhaftigkeit gegen Korrosion und andere Langzeit-Schädigungen, Fälschungssicherheit, Mindestveränderungen im metallischen Gefüge, die metallografisch noch nachweisbar sind (dient ebenfalls der Fälschungssicherheit), maximale Verformung bzw. Beeinträchtigung der Festigkeit bei Kennzeichnung Festigkeits-beanspruchter Bauteile.

Aus diesen Gründen ist die Prägetiefe bei vielen Teile-Kennzeichnungen ein spezifiziertes Qualitäts-Kriterium, das in der Serienfertigung ständig kontrolliert werden muss. In Ermangelung geeigneter Mess-Einrichtungen, die in die Produktions-Linie integriert werden können, begnügt man sich in der Regel mit Stichproben-Kontrollen. Auch diese werden in Ermangelung geeigneter Messmethoden (Produktions-Umgebung, Werkstück-Vielfalt und Größen!) selten in Form von echten Messungen, sondern als rein visuelle Prüfungen und Vergleich mit Referenz-Mustern durchgeführt.

Im Zuge der tendenziell immer weiter greifenden Produkt-Haftung und bei Mängeln entstehender ebenfalls tendenziell steigender Regress-Forderungen, ist die kostengünstige, in die Produktionslinie integrierte und damit umfassende Überprüfung der Prägetiefe von Markierungen eine zunehmend zwingender werdende Forderung der Industrie. Typische Beispiele von industriellen Anwendungen im Automobilbereich sind Fahrgestell-Nummern, sicherheitsrelevante Komponenten oder andere direkt mit gesetzlichen Auflagen belegte Baugruppen, z. B. im Abgas-Bereich. Es sollte jedoch verstanden werden, dass der Automobilbereich hier nur exemplarisch erwähnt wird und dass das Erfordernis der Überprüfung der Prägetiefe in einer Vielzahl von Anwendungen in der Industrie besteht.

Überprüfungen geprägter Markierungen wurden bereits von der Anmelderin der vorliegenden Erfindung in der Serienproduktion eingesetzt. Zunächst war das Überprüfungs-Ziel ausschließlich die Konsistenz der markierten Daten, später kam die Prozess-Kontrolle des Markier-Systems hinzu, die aber auf Fehler-Mechanismen wie Werkzeug-Bruch (fehlende Markierung), schlecht gespanntes Werkstück (Verzerrungen der Schrift) oder Fehler in der NC-Steuerung (völlig verkehrte Zeichen) beschränkt war.

Neuerdings wurden auch Versuche unternommen, über verbesserte Bildauswertung moderner Kamerasysteme auch eine Information über die Markier-Breite bzw. -Tiefe zu gewinnen. Der Nachteil solche Systeme besteht einerseits im sehr hohen Grundpreis, andererseits in der vergleichsweise hohen Unsicherheit bzw. Streubreite der gewonnenen Ergebnisse und dem ebenfalls sehr hohen Erst-Einrichtungs- und Wartungs-Aufwand, um überhaupt zu einigermaßen nützlichen Messergebnissen zu gelangen.

Daher ist es eine Aufgabe der vorliegenden Erfindung eine Vorrichtung bzw. ein Verfahren zur Verfügung zu stellen, die bzw. das auf einem sehr wirtschaftlichem Weg eine genaue Qualitätskontrolle von Markierungen ermöglicht.

Im Rahmen der obigen Aufgabe besteht eine besondere Aufgabe der vorliegenden Erfindung in der Bereitstellung einer Vorrichtung bzw. eines Verfahrens, wobei die Messung der Prägetiefe einer Markierung an einem Werkstück mit hinreichender Genauigkeit und Reproduzierbarkeit ermöglicht wird.

Diese und weitere der nachstehenden Beschreibung zu entnehmenden Aufgaben werden durch eine Vorrichtung bzw. ein Verfahren gemäß den anliegenden Ansprüchen gelöst.

Weitere Merkmale und Vorteile der vorliegenden Erfindung sowie die Wirkungsweise verschiedener Ausführungsformen der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und einem Fachmann auf dem betreffenden Gebiet zu ermöglichen, die Erfindung herzustellen und zu verwenden. Dabei zeigen:
Fig. 1 eine schematische Querschnittsansicht eines Werkstücks mit einer Markierung darin und einem erfindungsgemäßen Sensor zur Bestimmung der Prägetiefe der Markierung;
Fig. 2A eine Draufsicht einer Markiervorrichtung mit einem Markierkopf und einem fest mit dem Markierkopf verbundenen erfindungsgemäßen Sensor zur Bestimmung der Prägetiefe der Markierung;

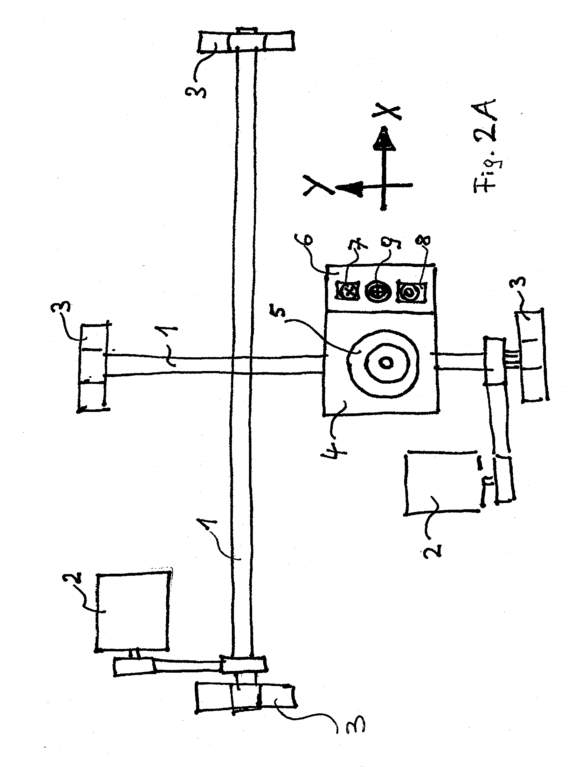

Fig. 2A eine schematische perspektivische Ansicht der Markiervorrichtung mit dem Markierkopf und dem fest mit dem Markierkopf verbundenen Sensor der Fig. 2A; und

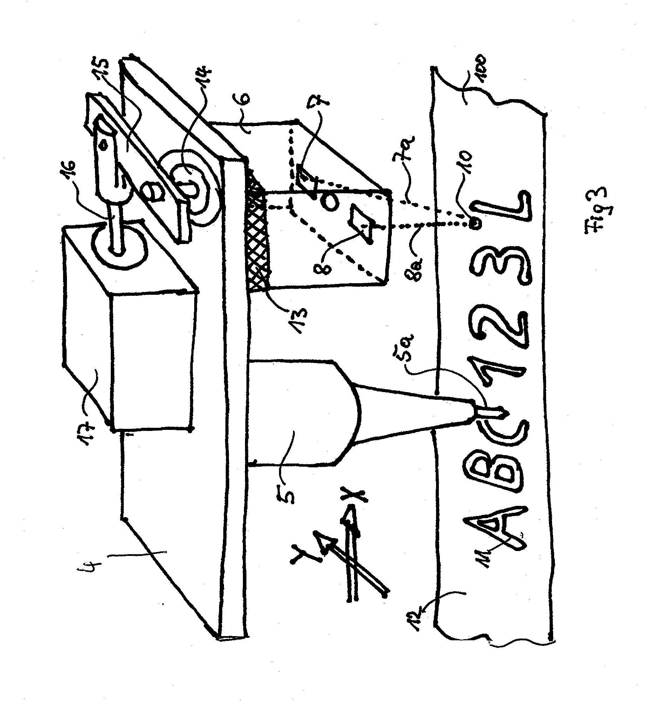

Fig. 3 eine schematische perspektivische Ansicht einer Markiervorrichtung mit einem Markierkopf und einem von Markierkopf getrennt verstellbaren erfindungsgemäßen Sensor zur Bestimmung der Prägetiefe der Markierung.

### Beschreibung der bevorzugten Ausführungsformen der Erfindung

Grundsätzlich wird erfindungsgemäß eine Vorrichtung und ein Verfahren bereitgestellt, wobei in einer Markiervorrichtung mit NC-Steuerung für den Markierkopf die bereits vorhandene Steuerungselektronik mit der Elektronik des Sensors für die Erfassung der Prägetiefe integriert wird (nachstehend verkürzt auch als Sensor bezeichnet), so dass die Steuerdaten der NC-Steuerung ebenfalls für die Positionierung des Sensors zur Verfügung stehen. Somit kann erfindungsgemäß der Sensor vorteilhaft gezielt eingesetzt werden, um nur relevante Abschnitte der Markierung zu erfassen und darüber hinaus seine Steuerung vereinfacht und die Menge an Erfassungsdaten der Prägetiefe minimiert werden.

Unter Bezugnahme auf die Fig. 1 wird eine schematische Querschnittsansicht eines Werkstücks 100 mit einer Markierung/Prägung 200 darin und einem erfindungsgemäßen Sensor 6 zur Bestimmung der Prägetiefe der Markierung gezeigt. Wie vorstehend erläutert, entstehen an den seiten des V-förmigen 200B der Markierung 200 jeweilige Aufwürfe oder Erhöhungen die mit dem Bezugszeichen 200A bezeichnet sind.

In einer derzeit bevorzugten Ausführungsform ist der Sensor 6, wie in Fig. 1 gezeigt, als Triangulations-Sensor implementiert.

Wie dem Fachmann jedoch bekannt, sind Sensoren zur Abstandsmessung in vielfältiger Bauart und Genauigkeit am Markt vorhanden. Insbesondere können Abstandsmessungen nach dem Triangulations-Verfahren mit Laserstrahlen oder koaxiale Systeme mit dynamischer Brennweiten-Verstellung und Laserstrahlen oder mit chromatischer Längsaberation von Weißlicht mittels Spezial-Objektiv und spektrometrischer Analyse der Reflektion eingesetzt werden.

Koaxiale System aller Prinzipien sind vom physikalischen Prinzip her genauer, aber nach aktuellen Preisen kostspieliger. Triangulations-Sensoren sind dagegen bereits sehr preiswert und mit steigender Leistungsfähigkeit verfügbar, so dass sie erfindungsgemäß bevorzugt eingesetzt werden können.

Allgemein können Tiefen-Messungen mit Abstands-Sensoren (ob nach Triangulations-Verfahren oder koaxial arbeitend) durchgeführt werden, indem entweder der Sensor oder das Werkstück auf einem Koordinaten-Tisch montiert und das Profil eines Linien-Abschnitts eines geprägten Zeichens quer zu Linien-Richtung "abgefahren" wird. Bei diesem Abfahren kann entweder positionsweise einzeln oder bei kontinuierlicher Fahrt mit einer festen Frequenz der jeweilige Messwert gespeichert und hieraus mit angepassten Rechen-Verfahren die gewünschte Tiefen-Information gewonnen werden. Somit entstehen eine Vielzahl von diskreten Messwerten.

Zur Unterdrückung von Messfehlern können so genannte aus dem Stand der Technik bekannte "angepasste Rechenverfahren" eingesetzt werden. Hierzu zählen neben Mittelwertbildung über bestimmte Bereiche, Tiefpass-Filterung zur Rausch-Unterdrückung, komplexere statistische Methoden wie "Ausreißer-Test" und dergleichen. Solche Messungen wurden bisher ausschließlich als Labor-Messungen durchgeführt, wobei regelmäßig ein PC mit entsprechenden Programmen zur Auswertung benutzt wird. Teilweise wird dabei auch versucht, nicht nur einzelne Stellen der Prägung zu vermessen, sondern eine "Mess-Fahrt" quer durch alle Zeichen (d. h. längs zur Schrift) durchzuführen. Hierbei besteht jedoch die Problematik, dass sehr viele nicht verwertbare Messwerte anfallen, weil Zeichen an ungeigneten Stellen, z. B. an Kreuzungspunkten oder nicht rechtwinklig geschnitten werden.

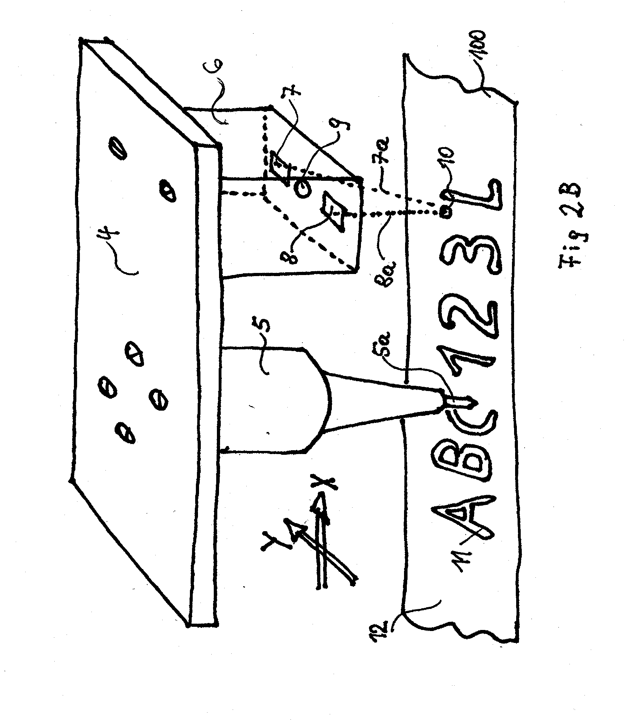

Unter Bezugnahme auf die Fig. 2A und 2B wird eine an und für sich bekannte Markiervorrichtung mit NC-Steuerung schematisch gezeigt. Die Markiervorrichtung umfasst jeweilige Spindeln 1 für x- und y- Antrieb eines Schlittens 4, jeweilige Antriebe 2 für x- und y- Richtung, jeweilige Lager 3 der x-und y-Spindeln 1, einen Prägekopf 5 (von oben gesehen, schematische Position), eine Prägenadel 5a (in dem abgebildeten Beispiel für Ritzprägen). Der Schlitten 4 ist herkömmlich mit einem Support für Prägekopf 5 ausgebildet.

Nach einer ersten Ausführungsform der Erfindung wird der Sensor 6 zusammen mit dem Prägekopf 5 am Support montiert.

Da sowohl die Ausbildung als auch NC-Steuerung der Markiervorrichtung bekannt sind, werden weitere Einzelheiten hierin nicht erläutert.

Der Sensor 6 ist - falls als Triangulations-Sensor implementiert - mit einem LichtAustritt 7 ausgebildet, aus dem ein Laser-Strahl 7a für Tiefen-Messung der Prägung/Markierung austritt. Darüber hinaus besitzt der als Triangulations-Sensor ausgebildete Sensor 6 einen Licht-Eintritt 8, bei dem der reflektierte Strahl 8a eintritt. Im Falle eines als koaxialer Sensor implementierter Sensor 6, der als Alternative in der Fig. 2A und 2B angedeutet ist, besteht ein mit Bezugszeichen 9 bezeichneter Licht-Aus- und Eintritt.

Das vom Triangulations- oder koaxialen Sensor 6 emittierte Licht wird an einem Punkt 10 an der Oberfläche 12 des Werkstücks 100 fokussiert und trifft auf die vertiefte Markierung/Prägung 200. Wie erläutert, erfolgt der Abtastvorgang in Querrichtung zur Markierung/Prägung 200, wobei zunächst die links liegende, nicht verformte, Oberfläche 12 des Werkstücks 100 als Referenz-Oberfläche, dann der linke Aufwurf 200A, die V-förmige Vertiefung 200B und der rechte Aufwurf 200A und letztendlich die rechts liegende, nicht verformte, Oberfläche 12 des Werkstücks 100 abgetastet werden.

In einer zweiten Ausführungsform der Erfindung, die in der Fig. 3 gezeigt ist und in der nur ein Triangulations-Sensor vorhanden ist, wird der Sensor 6 um eine senkrechte Achse drehbar ausgebildet, mit einem drehbarer Träger 13, einem Drehlager 14 für den Sensor-Träger 13 am Support, einem Hebel-Arm 15 zum Verdrehen des Sensors 6, einer Schubstange 16 zum Verdrehen des Sensors 6, und einer Hubeinheit 17, die z. B. als Magnet oder PN-Zylinder ausgebildet ist. Die zweite erfindungsgemäße Ausführungsform ist von besonderem Vorteil, da sie eine genaue Positionierung eines Triangulations-Sensor, durch die eine Verdrehung um die senkrechte Achse herum gestattet wird, so dass die durch den einfallenden Laser-Strahl 7a und dem reflektierten Laser-Stahl 8a gebildete Ebene in einem festlegbaren Winkel zur abgetasteten Stelle der Markierung/Prägung 200 steht.

Erfindungsgemäß wird die NC-Steuerung des Controllers (nicht gezeigt) der Markiervorrichtung zusätzlich dazu benutzt, um nach erfolgter Prägung den Sensor 6 im Sinne einer "Mess-Fahrt" über den gesamten Präge-Bereich zurück zu fahren. Durch Synchronisation der Bahndaten der NC-Steuerung mit den anfallenden Messwerten kann die exakte Position zugeordnet werden.

Hierbei können bestimmte Bereiche gezielt als "Mess-Bereiche" ausgewählt werden (nachstehend auch dynamische Auswahl), die hierfür geeignet sind. Dazu gehören bestimmte Zeichen (z. B. Buchstaben oder Zahlen), die besonders für die Bestimmung der Tiefe geeignet sind oder Bereiche solcher Zeichen. Die Zeichen oder die geeigneten Bereiche der Zeichen können in jeder beliebigen Richtung abgefahren werden, so dass die jeweilige Beschriftung 11 am Werkstück in einem definierten Winkel - vorzugsweise rechtwinklig - geschnitten wird.

Im Falle der zweiten Ausführungsform der Fig. 3 kann sogar der Sensor 6 selbst noch vom Controller der Markiervorrichtung um seine Achse gedreht werden, um beispielsweise die Basis-Strecke der Triangulations-Sensors, definiert zu einer zu messenden Linie, auszurichten. Das kann über eine weitere NC-Achse kontinuierlich (ähnlich wie in Fig. 3 gezeigt, aber mit motorisch angetriebener Rotation) oder durch eine einfache Hebel-Mechanik für beispielsweise 2 oder 3 alternative Positionen (wie in Fig. 3 gezeigt) erfolgen.

Erfindungsgemäß ist vorteilhaft, dass so viele, bzw. so wenig "Mess-Bereiche" ausgewählt werden können, wie einerseits für eine gesicherte Aussage für die gesamte Prägung erforderliche sind und so, dass andererseits die Menge anfallender Messwerte und der damit verbundene Rechenaufwand minimiert werden. Das spart erforderliche Hardware-Performance (System-Kosten) und Prozess-Zeit. Vorzugsweise wird je ein Messbereich am Anfang, in der Mitte und am Ende der Prägung ausgewählt.

Lage und Form der zu messenden Bereiche können entsprechend den Eigenschaften des eingesetzten Sensors (unterschiedliche Funktionsprinzipien und individuelle Eigenschaften) optimiert werden.

Die Messbereiche können, wie erwähnt, "dynamisch" ausgewählt bzw. der aktuellen Zeichenfolge der Markierung zugeordnet werden, weil der Controller der Markiervorrichtung ohnehin einerseits die zu markierende Zeichenfolge kennt und andererseits die Zeichenform als "Font-Satz" gespeichert hat. Anders ausgedrückt, werden jene Zeichen (z. B. der Buchstabe "H") oder Bereiche von Zeichen für die Messung vorgesehen, die dafür geeignet sind und in einer Vorzugs-Tabelle abgelegt werden können. Bei der dynamischen Auswahl kann beispielsweise eine Rangfolge von bevorzugt zu prüfenden Zeichen (einschließlich der jeweils fest zugeordneten Mess-Stelle) definiert werden, wobei dann für jede Messung "Anfang" / "Mitte" / "Ende" jeweils ein Bereich von z. B. 3 Zeichen erlaubt ist und das zu Messende nach der Vorzugs-Tabelle ausgewählt wird.

Die Steuerung des Controllers der Markiervorrichtung kann während der "Mess-Fahrten" Trigger- und so genannte Tor-Signale an die (nicht gezeigte) Elektronik des Sensors geben, um dort Messungen zu starten, in einem bestimmten Bereich kontinuierlich oder diskret auszuführen.

Nach einem Aspekt der Erfindung können je nach Fähigkeiten der Elektronik des Sensors alle Messwerte direkt in den Controller der Markiervorrichtung übertragen werden, oder nach Vor-Verarbeitung in Form von Filterung zur Spitzen-Unterdrückung, Mittelwertbildung, oder min/max-Speicherung von kontinuierlich durchgeführten Messungen gezielt abgerufen werden. Insbesondere kann die Elektronik des Sensors mit einer "Intelligenz" ausgestattet werden, so dass abhängig von den reflektiven Eigenschaften der abgetasteten Oberfläche des Werkstücks verschiedene Tiefpass-Filterungen für die Abtastwerte verwendet werden, um Artefakte in den Werten zu eliminieren und um die Datenmenge zu reduzieren. So z. B. kann eine erste Tiefpass-Filterung für die nicht verformte Oberfläche 12 (Referenz-Oberfläche) des Werkstücks 100, eine zweite Tiefpass-Filterung für die aufgerauhten Aufwürfe 200A und eine dritte Tiefpass-Filterung für die glatte V-förmige Vertiefung 200B der Markierung eingesetzt werden.

Somit kann der Controller für verschiedene Bereiche der Messungen (Referenz-Abstand, Spitze des Aufwurfs und Tiefe der Prägung) unterschiedliche Parametrierungen für die Signal-Aufbereitung (Tiefpass-Filterung) vorhalten und hiermit die Elektronik des Sensors jeweils optimal "einstellen". Je nach Leistungsfähigkeit (Intelligenz) der Elektronik des Sensors kann die Auswahl der Parametrierungen für die Signal-Aufbereitung (Tiefpass-Filterung) entweder durch Übertragung der entsprechenden Konfigurationsdaten oder durch Auswahl von in der Elektronik des Sensors bereits hinterlegten Daten-Sätzen erfolgen. Die endgültige Verknüpfung aller vom Sensor übertragenen Daten zu einem Gesamt-Ergebnis für die jeweilige Mess-Stelle und das Werkstück insgesamt erfolgt in jedem Fall im Controller der Markiervorrichtung.

Es ist weiterhin erfindungsgemäß vorgesehen, dass der Controller der Markiervorrichtung ebenfalls einzelne Messwerte oder auch nur die Gesamt-Ergebnisse im Sinne einer Log-Datei an eine übergeordnete Steuerung übertragen. Hierdurch können dort, über die aktuelle Einzelprüfung einer Markierung hinaus, weitere statistische Auswertungen, Trend-Analysen usw. zur Prozess-Optimierung gemacht werden, ebenso wie Protokoll-Dateien für Dokumentations- und Nachweis-Zwecke erstellt werden.

Die Erfindung gemäß der vorstehend geschilderten Ausführungsformen ist einer Vielzahl von weiteren Anwendungen zugänglich.

Insbesondere kann die Bestimmung der Prägetiefe, die wie erwähnt ein Profil eines Linien-Abschnitts eines geprägten Zeichens quer zur Linien-Richtung liefert, ausgewertet werden, um eine Verschleiß-Überwachung an der Spitze der Prägenadel 5a durchzuführen.

Bekanntlich ist neben vielen anderen möglichen Fehlern für eine unzulängliche Prägetiefe eine der häufigsten Ursachen der Verschleiß der Spitze der Prägenadel, die üblicherweise mit einem Winkel von 90° oder 120 ° und einem Spitzenradius von 0,1 mm bis 0,4 mm ausgeführt wird.

Wenn diese Spitze verschleißt, verändert sich vor allem ihre Kugelform ganz vorne, die eine Abflachung mit sehr viel größerem Radius erfährt. Über den jetzt erhöhten Widerstand beim Eindringen in das Werkstück reduziert sich auch die Prägetiefe. Die Veränderung der Prägetiefe infolge des Verschleißes der Spitze ist jedoch zunächst sehr viel weniger signifikant, als die Veränderung der Kugelform an der Spitze. Deshalb ist es besser, für eine Frühwarnung wegen beginnendem Verschleiß der Kugelform zu überwachen und hierfür Grenzwerte festzulegen.

Die Form bzw. der Radius der Kugel an der Spitze bildet sich beim Ritzen in der Querschnitts-Form der geritzten Linie an deren Grund, also im tiefsten Bereich exakt ab. Wenn also bei der Messung der Prägetiefe - die ohnehin quer zu dieser Linie erfolgt, nicht nur die Differenz des Basis-Niveaus zum tiefsten Bereich als "Tiefe" ermittelt wird, sondern wenn durch zusätzliche Messungen auch die Form des Querschnitts bzw. das Profil in diesem Bereich vermessen und entsprechend bewertet wird, kann der aktuelle Kugel-Radius bzw. der Verschleißzustand der Prägenadel direkt als eigenständiger Messwert gewonnen werden. Für die Vermessung der Kugelform mit den vorhandenen Einrichtungen bestehen folgende Varianten:
- Links und rechts von tiefsten Bereich wird eine bestimmten Anzahl von Messwerten übertragen und gespeichert, vorzugsweise mit äquidistanten Stützstellen. Mittels Regressions-Rechnung wird ein Kreisbogen als beste Annäherung durch diese Messwerte ermittelt, dessen Radius dann unmittelbar dem Aktuellen Radius der Kugel an der Spitze der Prägenadel entspricht.
- Alternativ können in einem festgelegten Abstand rechts und links zum tiefsten Bereich jeweils eine kleinere Anzahl von Messwerten gewonnen und deren Mittelwert dann als Tiefenmaß in diesem Abstand vom tiefsten Bereich betrachtet werden. Durch Differenzbildung mit dem tiefsten Bereich lässt sich dann ebenfalls eine direkte Maßzahl für die Kugelform bzw. Abflachung der Spitze gewinnen.
- Darüber hinaus können auch andere Methoden und Rechenverfahren eingesetzt werden, um aus mehreren Messwerten um den tiefsten Bereich herum eine signifikante Maßzahl für dessen Profil zu gewinnen. So könnte es beispielsweise vorteilhaft sein, für die Regressionsrechnung keinen Kreisbogen, sondern eine andere Kurvenform, etwa eine Parabel 4. Ordnung, zu verwenden. Oder es könnte ein Verfahren mit kontinuierlicher Verrechnung der laufend übertragenen Einzel-Messwerte um den tiefsten Bereich herum verwendet werden, bei dem weniger Werte gespeichert werden müssen, oder es könnten Verfahren eingesetzt werden, die spezielle, im Prozessor des Controllers der Markiervorrichtung implementierte Befehle verwenden, insbesondere, wenn beispielsweise ein Signalprozessor verfügbar ist.

Unabhängig von der Art der Messwert-Aufbereitung und unabhängig davon, wie viel Aufbereitung bereits im Messverstärker des Sensors und wie viel erst im Controller der Markiervorrichtung erfolgt, werden für die gewonnen Ergebnisse Grenzwerte definiert, sowohl für die Meldung "Warnung - Werkzeugwechsel durchführen" als auch für jene "nicht zulässig".

Erfindungsgemäß kann die Vorrichtung und das Verfahren zur Vermessung der Prägetiefe von Markierungen auch für die Detektion von verzerrten/verschobenen Zeichen eingesetzt werden.

Einer der häufigsten Fehler beim Ritzprägen sind verzerrte oder versetzte Zeichen. Diese entstehen, wenn während des Verfahrens des Prägekopfes unvorhergesehene Hindernisse die Bewegung stören. Typische Hindernisse sind beispielsweise Schweißperlen beim Prägen von Fahrgestellnummern im Rohbau der Karosserie-Fertigung, oder falsch verlegte Kabel und Leitungen bis hin zu Kabelbindern oder Verunreinigungen mit Antidröhnmasse beim Prägen in teilmontierten Fahrzeugen.

Geregelte Antriebe gehen hierbei automatisch in Störung, während die überwiegend eingesetzten schrittmotorischen Antriebe lediglich "Schritte verlieren". Das äußert sich dann in verzerrten oder verschobenen Zeichen. Ein solcher Fehler bleibt dann als permanente Verschiebung bestehen, so dass alle danach geprägten Zeichen zumindest an einer falschen Position sitzen (falls sie überhaupt noch geprägt werden).

Nach dem heutigen Stand der Technik werden zur Überwachung für diesen Fehler-Mechanismus Kameras eingesetzt, die geprägten Zeichen an den jeweiligen Positionen bezüglich der Zeichen-Form ("Font") verifizieren. Es wird bewusst nur "verifiziert" und nicht "gelesen", das heißt es genügt eine genügend hohe Übereinstimmung mit einem hinterlegten, gültigen Font, während nicht zusätzlich geprüft wird, dass ein bestimmter Mindestabstand zur Übereinstimmung mit einem anderen, ähnlichen Font gewährleistet ist, wie es für das "Lesen" zur Rückgewinnung der Information erforderlich wäre. Nur durch diese Reduktion auf das Verifizieren gelingt es die Überwachung bezüglich der oben geschilderten Prägefehler bzw. deren Ursachen in einem hinreichenden Maß Prozess-sicher zu gestalten. Daher ist ein weiteres erfindungsgemäßes Ziel, dieses bekannte Verfahren zu umgehen und die in der Einleitung der Anmeldung geschilderten Nachteile der kostspieliegen und schwer justierbaren Kamerasysteme zu vermeiden.

Erfindungsgemäß werden beim selektiven Messen der Prägetiefe an ganz bestimmten Stellen der Prägung und der jeweiligen Fonts diese Positionen mit einer sehr hohen Genauigkeit - nämlich derjenigen, die auch zur Erzeugung der Prägung benutzten NC-Steuerung und Antriebe - angefahren. Diese Genauigkeit ist typischerweise im Bereich von 10 µm und wird nicht von Hindernissen der vorstehend geschilderten Art beeinträchtigt, da sie getrennt vom eigentlichen Prägevorgang in einem Zustand erfolgt, in dem die Prägenadel mit der zu prägenden Oberfläche nicht im Eingriff ist. Somit kann bei der Messung der Prägetiefe davon ausgegangen werden, dass die angepeilte Position im wesentlichen absolut richtig ist.

Da sich ein einmal entstandener Schrittverlust als Versatz bis zum Ende der Prägung fortpflanzt, gleichgültig in welcher der Achsen oder in beiden, wird eine Messung der Prägetiefe nach dem Ende des Prägungsvorgangs, die bezüglich der Position mit dieser Genauigkeit durchgeführt wird, niemals ein "falsches" richtiges Ergebnis liefern können. Deshalb detektiert das erfindungsgemäße Verfahren zur Messung der Prägetiefe automatisch auch Prozess-Fehler beim Markieren, die ihre Ursache in Hindernissen im Fahrweg oder andern Gründen zum Schrittverlust haben. Somit kann die Aufgabe der nach heutigem Stand der Technik mit Font-Verifikation durch Kameras mit Bildauswertung durchgeführten Überwachung von der erfindungsgemäßen Vorrichtung und dem Verfahren der im Controller integrierten Messung der Prägetiefe vollständig erfüllen.

Die Erfindung ist für Abänderungen zugänglich, ohne sich von ihrem Schutzumfang zu lösen. So kann beispielsweise der Controller der Markiervorrichtung "einstufig" oder "zweistufig" ausgebaut sein.

Wenn eine Prägervorrichtung in einer größeren Anlage eingebaut ist und vor allem auch keine eigene Bedienung durch Personen vorgesehen ist, z. B. zur Dateneingabe, wird eine einstufige Bauweise des Controllers der Prägevorrichtung bevorzugt, die im wesentlichen eine spezielle NC-Steuerung für den Antrieb der NC-Achsen und die Verwaltung der Zeichenfonts implementiert. Der einstufige Controller nimmt dann in geringem Maße noch Aufgaben der so genannten Ablauf-Steuerung war, was sich im wesentlichen auf einen einfachen Signalaustausch mit der Anlagensteuerung beschränkt. Die Prägedaten werden entweder als Datenstring zum Controller übertragen oder in einfachen Fällen sogar autark von diesem erzeugt, (z. B. Serien-Nummer durch einen inkrementalen Zähler oder Datum mittels eingebauter Uhr). Diese Art von Controller und Steuerung wird als "maschinennah" bezeichnet.

Sobald aber zusätzlich zur eigentlichen Präger-Steuerung eine Bedienung durch Personen oder eine komplexere Datenbehandlung erforderlich werden (z. B. Auslesen aus Datenbanken, Extraktion oder Umformen von Rohdaten), wird zusätzlich zum "maschinennahen" Controller als zweiter Teil ein PC eingesetzt und somit eine zweistufige Steuerung bzw. ein zweistufiger Controller realisiert. In einem solchen Fall werden dann automatisch einige der Aufgaben, die bei einstufigen Steuerungen im "maschinennahen" Controller wahrgenommen werden, vom PC-Programm aus gesteuert und der "maschinennahe" Controller wird zum nicht-intelligenten Befehls-Empfänger degradiert, der beispielsweise lediglich für die Positionierung in Übereinstimmung mit den von PC empfangenen Daten zuständig ist. Es ist jedoch denkbar, dass auch eine andere Verteilung von Steueraufgaben zwischen Controller und PC implementiert wird, in denen der Controller zum Teil intelligente Steueraufgaben übernimmt. Erfindungsgemäß ist beabsichtigt, dass der Begriff "Controller" sowohl eine einstufige als auch eine zweistufige sowie eine flexible Ausführung mit einer Verteilung der Steueraufgaben umfasst.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

## Patentansprüche

1. Vorrichtung zur Vermessung der Prägetiefe von Markierungen an einem Werkstück, die einen an einer Markiervorrichtung mit NC-Steuerung angebrachten Sensor für die Erfassung der Prägetiefe umfasst, wobei die NC-Steuerung mit der Elektronik des Sensors derart integriert ist, dass die Steuerdaten der NC-Steuerung ebenfalls für die Positionierung des Sensors zur Verfügung gestellt werden.

2. Vorrichtung nach Anspruch 1, wobei der Sensor als Triangulations-Laser-Sensor ausgebildet ist; oder
wobei der Sensor als koaxialer Laser-Sensor oder Weißlicht-Sensor ausgebildet ist.

3. Vorrichtung nach Anspruch 2, wobei der Sensor fest oder drehbar am Support der Markiervorrichtung gelagert ist.

4. Vorrichtung nach einem oder mehreren der vorhergehenden Ansprüche, wobei der Sensor mit einer selektiven Parametrierungs-Funktion, insbesondere einer Tiefpass-Funktion ausgestattet ist, so dass die Abtastwerte abhängig von den reflektiven Eigenschaften der abgetasteten Oberfläche des Werkstücks bzw. der Markierung unterschiedlich Parametrisiert bzw. Tiefpass-gefiltert werden; und/oder
wobei der Sensor um eine senkrecht zur Oberfläche des Werkstücks stehende Achse an einem Support der Markiervorrichtung drehbar gelagert ist.

5. Vorrichtung nach einem oder mehreren der vorhergehenden Ansprüche, die weiterhin eine Vorzugs-Tabelle umfasst, in der eine Rangfolge von bevorzugt zu prüfenden Zeichen einer Markierung und/oder Positionen innerhalb dieser Zeichen abgelegt werden.

6. Vorrichtung nach einem oder mehreren der vorhergehenden Ansprüche, wobei die Steuerdaten der NC-Steuerung derart für die Positionierung des Sensors zur Verfügung gestellt werden, dass der Sensor an ausgewählten Bereichen der Markierungen positionierbar ist.

7. Vorrichtung nach einem oder mehreren der vorhergehenden Ansprüche, wobei die Steuerdaten der NC-Steuerung für die Parametrierung des Sensors und/oder für die positionsabhängige Bewertung der Messwerte bereitgestellt werden; und/oder
die weiterhin ausgebildet ist, um den Sensor derart anzusteuern, dass dieser ein Profil der Prägung an einem Linien-Abschnitt eines Zeichens quer zur Linien-Richtung diskret abtastet und anschließend ein Prägeprofil aus den diskreten Daten errechnet.

8. Vorrichtung nach einem oder mehreren der vorhergehenden Ansprüche, die weiterhin einen Controller umfasst, der ausgebildet ist die NC-Steuerung autark durchzuführen; oder
die weiterhin einen Controller umfasst, der ausgebildet ist die NC-Steuerung zusammen mit einem externen PC durchzuführen.

9. Verfahren zur Vermessung der Prägetiefe von Markierungen an einem Werkstück, die einen an einer Markiervorrichtung mit NC-Steuerung angebrachten Sensor für die Erfassung der Prägetiefe umfasst, wobei die NC-Steuerung mit der Elektronik des Sensors integriert ist, das folgende Schritte umfasst:
Positionierung des Sensors in Übereinstimmung mit den Steuerdaten der NC-Steuerung; und
Vermessung der Prägetiefe.

10. Verfahren nach Anspruch 9, wobei die Positionierung des Sensors an ausgewählten Bereichen der Markierungen erfolgt, und wobei vorzugsweise der Sensor als Triangulations-Laser-Sensor oder koaxialer Laser-Sensor oder Weißlicht-Sensor ausgebildet ist.

11. Verfahren nach Anspruch 9 oder 10, das den Schritt der Drehung des Sensors zur Ausrichtung mit der abgetasteten Markierung umfasst; und/oder
das den Schritt der Parametrierung, insbesondere der Tiefpass-Filterung der Abtastwerte des Sensors abhängig von den reflektiven Eigenschaften der abgetasteten Oberfläche des Werkstücks bzw. der Markierung umfasst; und/oder
das weiterhin den Schritt der Bestimmung umfasst, ob eine Prägung bei einer vorbestimmten Soll-Position vorliegt, und anschließend den Schritt der Entscheidung, ob eine Verzerrung/Verschiebung eines Zeichens vorliegt.

12. Verfahren nach einem oder mehreren der Ansprüche 9-11, wobei der Schritt der Vermessung der Prägetiefe folgende Schritte umfasst:
Vermessung einer nicht verformten Referenz-Oberfläche des Werkstücks, wobei vorzugsweise die Abtastwerte unter Verwendung einer ersten Parametrierungs-Funktion verarbeitet werden, die abhängig von den reflektiven Eigenschaften der Referenz-Oberfläche ausgewählt wird;
Vermessung eines Aufwurfs der Markierung, wobei vorzugsweise die Abtastwerte unter Verwendung einer zweiten Parametrierungs-Funktion verarbeitet werden, die abhängig von den reflektiven Eigenschaften des Aufwurfs ausgewählt wird; und
Vermessung einer V-förmigen Vertiefung der Markierung, wobei vorzugsweise die Abtastwerte unter Verwendung einer dritten Parametrierungs-Funktion gefiltert werden, die abhängig von den reflektiven Eigenschaften der V-förmigen Vertiefung ausgewählt wird.

13. Verfahren nach einem oder mehreren der Ansprüche 9-12, das die Übertragung von Parametrierungsdaten aus der NC-Steuerung an die Steuerelektronik des Sensors umfasst.

14. Verfahren nach einem oder mehreren der Ansprüche 9-13, das weiterhin den Schritt der Erfassung des Profils der Prägung an einem Linien-Abschnitt eines Zeichens quer zur Linien-Richtung umfasst, und weiterhin vorzugsweise den Schritt der Bestimmung des Verschleißes einer Spitze einer Prägenadel anhand des Profils der Prägung umfasst.
